# EUROPEAN PATENT SPECIFICATION

(11) **EP 2 312 155 B1**
(45) Date of publication and mention of the grant of the patent: **20.03.2019**
(21) Application number: 09173149.7
(22) Date of filing: 15.10.2009
(51) Int. Cl.: F04B 1/04, F04B 53/14, F16J 15/00

(54) **Fluid pump and plunger therefor**
Flüssigkeitspumpe und Pumpenkolben
Pompe à fluide et piston correspondant

(43) Date of publication of application: 20.04.2011
(73) Proprietor: Delphi International Operations Luxembourg S.à r.l., 4940 Bascharage (LU)
(72) Inventor: HOPLEY, Daniel, Chislehurst, Kent BR7 5EG (GB)
(74) Representative: Delphi France SAS

(56) References cited:
- EP-A- 0 106 187
- WO-A-99/06702
- DE-A1-102004 056 660
- DE-C- 953 223
- US-A- 5 427 504
- US-A1- 2003 155 117

## Description

### TECHNICAL FIELD

The invention relates to a fluid pump suitable for pumping fluid at high pressures. In particular, but not exclusively, such a pump is suitable for generating high pressure diesel fuel and supplying that fuel to a high pressure accumulator in an automotive fuel injection system.

### BACKGROUND OF THE INVENTION

One type of fluid pump known in the art is commonly referred to as a plunger pump. A plunger pump generally comprises a pump housing or 'head' that defines a cylindrical plain-walled bore within which a pumping plunger in the form of an elongate rod is received. The pumping plunger has an inner end that is received within the bore and defines a pumping chamber within a closed end region of the bore. An outer end of the pumping plunger is adapted to engage a driving mechanism which drives the plunger to reciprocate in the bore so that the plunger moves inwardly to define a pumping stroke, and outwardly to define a return stroke, also referred to as an induction stroke.

The pump housing includes, in the region near to the pumping chamber, an inlet valve arrangement which permits fluid to enter the pumping chamber during an induction stroke of the plunger, and an outlet valve which permits fluid to be pumped from the pumping chamber during a pumping stroke of the plunger. Typically, the outlet valve takes the form of a spring-biased ball valve which is caused to open once the fluid in the pumping chamber has reached a given pressure, which is determined by the strength of the spring and the downstream fuel pressure.

In such a plunger pump, it is possible for fluid to leak from the pumping chamber past the periphery of the plunger due to sliding clearance that the plunger defines with the bore. It is known in some applications for such leakage to be controlled through accurate sizing of the plunger and the bore so that the clearance between the two surfaces acts as a seal to limit leakage to acceptable levels. However, one drawback of this approach is that in high pressure pumping applications the plunger bore will dilate slightly which increases leakage significantly. Also, the fine surface finish and precision geometry required on the plunger and the bore for such an approach leads to a high processing cost.

In other applications, for example, those in which the fluid to be pumped is noxious such that any leakage is undesirable, it is known to incorporate a sealing arrangement into the wall of the cylinder to span the gap between the cylinder wall and the outer peripheral surface of the plunger. Such sealing arrangements are known in the art as packing or 'stuffing boxes'. However, such sealing arrangements tend to be rather complex, and hence costly, and also are prone to wear so needing frequent replacement.

A prior art piston pump for a vehicle hydraulic brake system is described in WO 99/06702. A rigid plastic sealing element is carried on a recessed end of the piston in a packing. The sealing element has a conical surface against which is pressed a piston return spring directly or via a spacer ring having a corresponding conical surface. The sealing element is thus pressed firmly against the packing. DE102004056660 A1 discloses a prior art piston pump having a one-piece sealing element in a recess of the piston. The recess is positioned at a distance from the pumping chamber.

### SUMMARY OF THE INVENTION

It is against this background that the invention provides a diesel fuel pump, for an internal combustion engine, said pump comprising a pumping plunger, having a recessed end region defining a pumping face of the plunger. Said recess end region has a diameter less than the diameter of a main body portion and, wherein the plunger carries a sealing ring including an annular member arranged in said recessed end region proximal to the pumping face. Moreover, the annular member defines an orifice and, it comprises first and second semi-circular ring portions.

Moreover, the orifice may be dimensioned to provide a predetermined leakage rate past the sealing ring.

Moreover, the orifice is a radial gap in the sealing ring.

Moreover, the sealing ring includes a longitudinally tapered region.

Moreover a spring is disposed between the first and second semi-circular ring portions. Moreover, the pumping plunger includes a retaining member received and secured over the recessed end region so as to retain the annular member.

Moreover, the retaining member includes a leading edge having a graduated diameter.

The invention also extends to a fuel pump comprising a pumping head defining a bore, within which the pumping plunger of the invention is slidably received. A drive arrangement is cooperable with the pumping plunger.

It is a known problem with plunger pumps that high fluid pressures generated during pumping dilates the bore which can cause leakage flow to increase to unacceptable levels. The invention mitigates this leakage problem by providing a sealing ring on the pumping plunger to enhance the sealing function provided by the clearance that the plunger defines with the bore.

In order to control leakage from the bore at a wide range of pumping pressures, the diameter of the sealing ring is expandable in order to maintain a tight clearance between the sealing ring and an associated bore. To this end, the sealing ring is provided with the orifice, preferably in the form of a radial gap enabling the collar to expand radially as the pumping pressure increases. Preferably, the gap is dimensioned to provide a predetermined leakage flow rate from the high pressure side of the sealing ring to its low pressure side. This ensures that the sealing characteristics of the sealing ring can be tuned to achieve a controlled pressure drop across the sealing ring, therefore avoiding too great a pressure drop which could potentially cause damage.

To aid in assembly of the plunger into the bore of the pump, the sealing ring may include longitudinally tapered edge face. Therefore, as the plunger is installed into the bore, the outer periphery of the sealing ring is less likely to snag the opening of the bore.

In an alternative embodiment, the two half-rings can be received in an annular groove on the plunger and there is no requirement for a retainer member.

### BRIEF DESCRIPTION OF THE DRAWINGS

In order that the invention may be better understood, it will now be described, by way of example only, with reference to the accompanying drawings, in which:
Figure 1 is a simplified view of a plunger pump having a pumping plunger in accordance with an embodiment of the invention;
Figure 2 is a perspective view, in cross section along its longitudinal axis, of the pumping plunger in Figure 1;
Figure 3 is a perspective view of the sealing arrangement as carried on the pumping plunger in Figure 2;
Figure 4 is a perspective view of an alternative sealing arrangement; and
Figures 5, 6 and 7 are cross section views of alternative sealing arrangements to that shown in Figure 4.

### DETAILED DESCRIPTION OF THE INVENTION

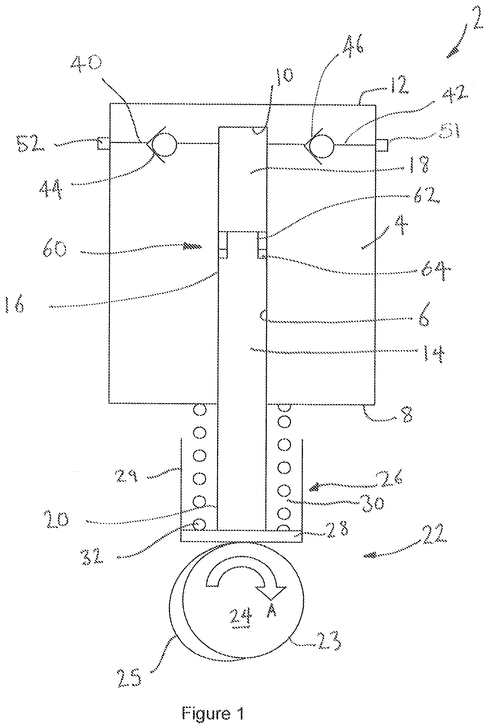

Referring to Figure 1, a plunger pump 2 includes a block-like pump head 4 having a centrally located blind bore 6 that is circular in cross section. The bore 6 opens at a lower face 8 of the pump head 4 and extends upwardly to define a blind end 10 in the proximity of an upper face 12 of the pump head 4. A pumping plunger 14 is provided in the form of an elongate, generally cylindrical, hardened steel rod which is able to slide back and forth within the bore 6 along its longitudinal axis. An inner end 16 or 'pumping face' of the pumping plunger 14 defines a pumping chamber 18 with the blind end 10 of the bore 6.

At this point it should be noted that the term pumping plunger is used herein in its accepted engineering sense of an elongate pumping member having a length which is significantly greater than its diameter. It is this characteristic that is commonly relied upon to provide a sealing function in a plunger pump in high pressure pumping applications. A plunger is to be distinguished from a piston which is typically of discoid form having a length less than or generally comparable to its diameter and which provides no direct sealing function.

A lower end 20 of the pumping plunger 14 cooperates with a drive arrangement 22 in the form of a rotatable cam member 24, having a base circle 23 and a cam lobe 25, which drives the pumping plunger 14 in a reciprocating manner to perform a pumping stroke and a return stroke, as described in further detail below.

A tappet member 26 sits between the cam member 24 and the lower end 20 of the pumping plunger 14 and includes a tappet base 28 that provides a relatively large contact face for the cam member 24 to act on the pumping plunger 14. The tappet member 26 is in the shape of a bucket and includes a side wall 29 extending upwards from the base 28 defining a central chamber 30 which houses a helical compression spring 32 extending from the tappet base 28 to the lower face 8, or underside, of the pump head 4. The spring 32 acts on the tappet member 26 and, therefore, on the pumping plunger 14, which is affixed to the tappet base 28, to ensure that the plunger 14 is biased outwardly from the bore 6, and therefore urged to perform a return stroke as permitted by rotation of the cam member 24.

The pump head 4 also includes a first fluid passage 40 constituting an inlet to the pumping chamber 18 and a second fluid passage 42 constituting an outlet from the pumping chamber 18. Each fluid passage incorporates an associated spring-biased non-return or 'check' valve 44, 46 to ensure that fluid can only flow through the first and second fluid passages in one direction: into or out of the pumping chamber 18, respectively.

It should be mentioned at this point that the plunger pump 2 of Figure 1 is greatly simplified for present purposes and that, in practice, such a pump would include many additional components. However, the principle features of such a pump are as shown and described herein.

The plunger pump 2 operates as follows. In the initial position shown in Figure 1, the tappet member 26 rests on the base circle 23 of the cam member 24 and, therefore, the pumping plunger 14 resides in a bottom dead centre (BDC) position, at which point the volume of the pumping chamber 18 it at a maximum. Note that at this initial condition, the pumping chamber 18 is filled with fluid.

The cam member 24 rotates in the direction of the arrow 'A' such that the tappet member 26 rides up the surface of the cam lobe 25 which drives the pumping plunger 14 along the bore 6 to perform a pumping stroke during which the volume of the pumping chamber 18 is reduced, thus pressurising the fluid in the pumping chamber 18. When the fluid pressure has reached a predetermined pressure, the outlet check valve 46 opens which allows the pressurised fluid to evacuate the pumping chamber 18 through the outlet fluid passage 42. Although not shown in Figure 1, the pumped fluid would be directed to a suitable load such as an high pressure accumulator storage volume connected via suitable pipe work to an outlet connector 51 of the plunger pump 2.

Following the pumping stoke, continued rotation of the cam member 24 results in the tappet member 26 riding down the back of the cam lobe 25 which draws the pumping plunger 14 outwardly to perform a return stroke. During a return stroke, the volume of the pumping chamber 18 increases which draws a vacuum resulting in a fresh charge of fluid being admitted into the pumping chamber 18 through the inlet fluid passage 40 and past the inlet check valve 44. Note that although not shown in Figure 1, in practice a low pressure fluid supply is connected via appropriate pipe work to an inlet connector 52 of the plunger pump 2 so provide for filling of the pumping chamber 18 during the return stroke.

Such a pump as described above is particularly suitable for the pumping of diesel fuel at high pressures for storage into an accumulator volume, or 'common rail' of a compression-ignition internal combustion engine, although this should not be considered limiting the inventive concept in any way.

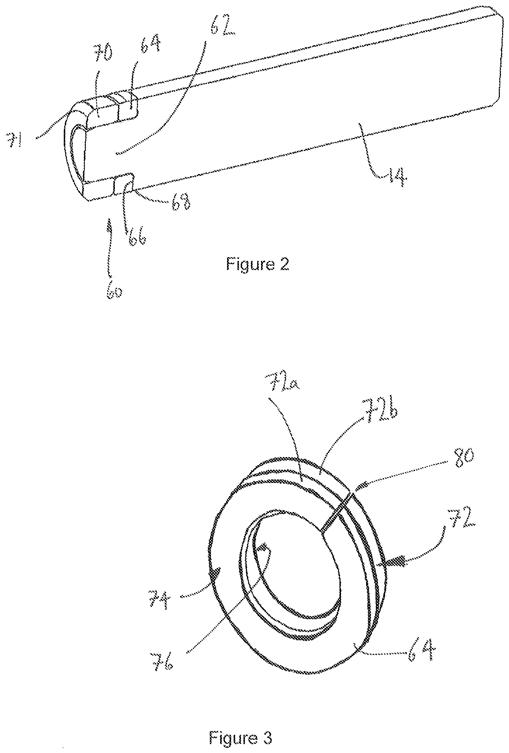

Referring also to Figure 2, the pumping plunger 14 incorporates a sealing arrangement 60 defined at the inner end 16 of the pumping plunger 14. The inner end 16 of the plunger 14 has a stepped profile so as to define a relatively narrow tip region 62, the diameter of which is less than the main body portion of the plunger 14. The sealing arrangement 60 comprises an annular sealing member in the form of a collar or ring 64 that is received over the tip region 62 of the plunger 14 and abuts a shoulder 66 defined by a step 68 in the plunger 14.

The depth of the sealing ring 64 is significantly less than the length of the tip region 62 of the plunger 14 which leaves a section of the tip region 62 protruding from the sealing ring 64. A second annular member 70 in the form of a retaining ring is received on the tip region 62 by way of a press fit so that the sealing ring 64 is held securely in place. Note that the retaining ring 70 could also be secured by an alternative manner if appropriate: for example it could be welded or glued, or it may even threaded so as to cooperate with an optional screw thread provided on the tip region 62, although a press fit provide a more simple fitment.

The retaining ring 70 has a radiussed leading edge 71 to assist insertion of the plunger 14 into the bore 6 of the pump 2. It should be noted at this point that the radius on the leading edge may instead be a chamber or taper, or another feature that would provide a graduated diameter.

Referring also to Figure 3, which shows the sealing ring 64 in greater detail, it can be seen that the sealing ring 64 defines an outer peripheral surface 72 having two main portions, referred to herein as a leading portion 72a and a trailing portion 72b due to the orientation of the sealing ring 64 on the plunger 14 relative to the bore 6. The leading portion 72a of the outer peripheral surface is provided with a shallow taper or chamfer, which assists the sealing ring 64 to slide into the bore 6 during assembly of the pump. In contrast, the trailing portion 72b of the outer peripheral surface has a substantially uniform diameter along its length.

As can be seen clearly in Figure 3, the sealing ring 64 is discontinuous having substantially flat upper and lower faces 74, 76 and defining an orifice in the form of a radial gap 80, which extends through the ring 64 perpendicular to a tangent of its outer periphery.

The gap 80, or 'discontinuity', provides the annular member with a degree of resilience and, as a result, the ring 64 is compressible which enables its outer diameter to be reduced to aid installation into the bore. Once the plunger 14 is installed in the bore, the compression of the sealing ring 64 is removed and so the outer peripheral surface is pressed into contact with the inner surface of the bore, thus forming a high pressure seal therewith.

During a pumping stroke, fluid pressure in the pumping chamber 18 rises to a high level, which can be up to approximately 3000bar, such a pressure having the effect of dilating the plunger bore slightly. In a known plunger pump having a plain plunger, the leakage flow of fluid around the outer surface of the plunger will increase as the pressure increases. However, an advantage of the plunger of the invention is that the outer diameter of the sealing ring 64 increases due to fuel pressure acting on it, and therefore remains in contact with the bore 6 so as to maintain an effective seal.

It should be noted that some leakage past the sealing ring 64 is desirable in order to control the pressure drop across it. The gap 80 in the sealing ring 64, together with the adjacent portion of the plunger 14/shoulder 66 thus acts as an orifice that permits a controlled flow of fluid from the pumping chamber 18 and into the sliding clearance between the bore 6 and the outer surface of the main body of the plunger 14. As a result, the total pressure drop between the pumping chamber 18 and the low pressure region in the vicinity of the drive arrangement 22 is shared between the annular member and the plunger clearance. It should be noted that the gap 80 is dimensioned appropriately to allow a certain flow rate of fluid during a pumping stroke which provides a predetermined pressure drop across the sealing ring.

A further benefit of the invention is that the controlled leakage through the gap 80 limits the force due to fluid pressure expanding the sealing ring 64, which keeps the friction between the plunger 14 and the bore 6 within tolerable limits thus avoiding excessive wear of either the bore or the sealing ring 64.

Many variations are possible within the inventive concept. For example, although it is envisaged that the sealing ring member 64 is manufactured from steel for example, other materials are also applicable. For instance, a suitable ceramic may also be used provided that it has the requisite structural qualities required by the sealing ring. Ceramics have the added advantage of a low coefficient of friction which will reduce the internal friction within the pump. Alternatively, a steel sealing ring may be provided with a ceramic coating as a friction reducing measure. An engineering plastics having high strength/hardness characteristics is also considered viable, particularly for lower pressure pumping applications.

Also, although the orifice in the sealing ring is embodied as described above as a gap in the sealing ring, it is also possible that the orifice is configured as one or more flutes, grooves or recesses defined in the surface of the sealing ring.

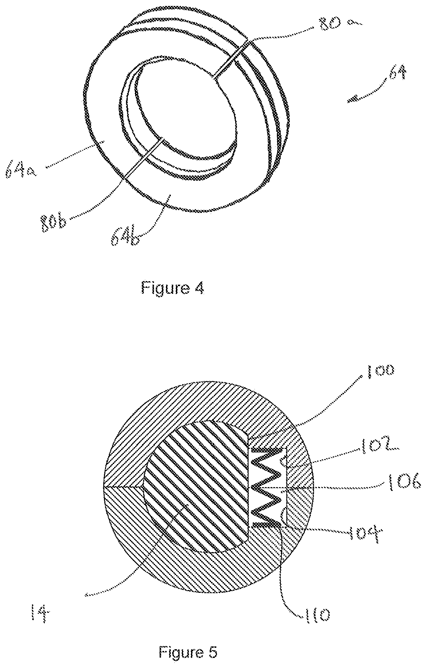

In an alternative embodiment, as shown in Figure 4, the sealing ring 64 may instead be comprised of first and section semi-circular ring portions 64a, 64b which, in effect, define two gaps 80a and 80b. In this variant, the inner end region 62 of the plunger 14 may be provided with an annular groove rather than a narrow tip region, as in Figures 1 and 2, thus avoiding the requirement for a retaining member to hold the annular member in position.

It should be noted that in this variant the sealing ring 64 is not resilient as in the first embodiment due to the split ring configuration. However, due to the hydraulic effects of the fluid flowing around the sealing ring portions 64a, 64b, they would tend to be urged into engagement with the bore.

However, in order to provide an additional force to bias the semi-circular ring portions 64a, 64b outwardly into engagement with the bore, a spring element may be provided, as is shown in Figure 5. In this variant, the plunger 14 is provided with a flat peripheral region 100 and the two semi-circular ring portions 64a, 64b are provided with suitable recesses 102, 104 such that a chamber 106 is defined therebetween for housing a compression spring 110.

The spring 110 therefore exerts a force on the semi-circular ring portions 64a, 64b that urges them into engagement with the internal surface of the plunger bore 6.

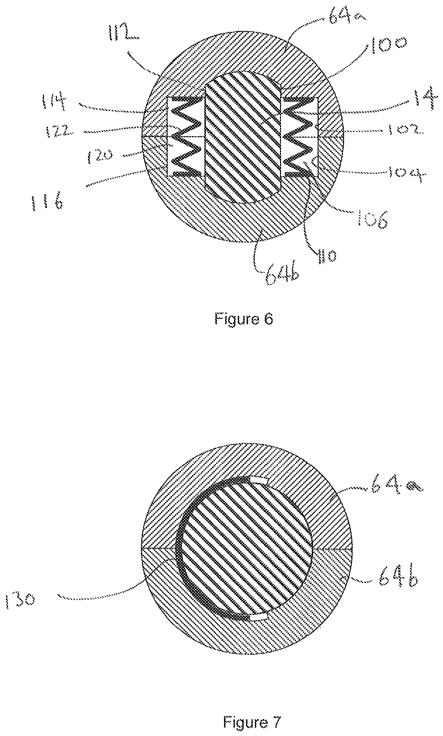

Figure 6 shows a further variant in which like parts to those in Figure 5 are denoted by the same reference numerals. In this variant, the plunger 14 is provided with a second flat peripheral region 112 that opposes the first flat peripheral region 100. The two semi-circular ring portions 64a, 64b also define further recesses 114, 116 which define a second chamber 120 housing a respective spring. Therefore, two springs are provided to provide a greater biasing force to the first and second semi-circular ring members 64a, 64b. Such a solution may be particularly applicable to large scale pumping applications.

Referring to Figure 7, a further variant includes a c-shaped spring element 130 that is housed within a recess defined by the inner surfaces of the first and second semi-circular ring portions 64a, 64b. It should be noted that this variant provided a more space efficient solution for providing an additional outward biasing force to the ring portions 64a, 64b. Also it should be noted that the c-shaped spring element 130 acts substantially on the centre of each ring portion 64a, 64b ensuring that the force applied thereto is symmetric.

## Claims

1. A diesel fuel pump (2) for an internal combustion engine, said pump comprising a pumping plunger (14) having a recessed end region (62) defining a pumping face of the plunger, said recess end region having a diameter less than the diameter of a main body portion and, wherein the plunger carries a sealing ring (60, 64, 70) including an annular member (64, 64a, 64b) arranged in said recessed end region proximal to the pumping face, the annular member (64, 64a, 64b) defining an orifice (80) and comprising first and second semi-circular ring portions (64a, 64b).

2. The diesel fuel pump of claim 1, wherein the orifice (80) is dimensioned to provide a predetermined leakage rate past the sealing ring (64, 64a, 64b).

3. The diesel fuel pump of claim 1 or claim 2, wherein the orifice (80) is a radial gap in the sealing ring.

4. The diesel fuel pump of claims 1 to 3, wherein the sealing ring (64, 64a, 64b) includes a longitudinally tapered region (72a, 72b).

5. The diesel fuel pump of claim 1, therein spring means is disposed between the first and second semi-circular ring portions (64a, 64b).

6. The diesel fuel pump of claim 1 including a retaining member (70) that is received over the recessed end region (62) and is secured thereto so as to retain the annular member (64) on the plunger (14).

7. The diesel fuel pump of claim 1, wherein the retaining member (70) includes a leading edge having a graduated diameter.

## Patentansprüche

1. Dieselkraftstoffpumpe (2) für einen Verbrennungsmotor, wobei die Pumpe einen Pumpkolben (14) aufweist, der einen ausgesparten Endbereich (62) hat, der eine Pumpfläche des Kolbens definiert, wobei der ausgesparte Endbereich einen Durchmesser hat, der geringer ist als der Durchmesser eines Hauptkörperabschnitts, und wobei der Kolben einen Dichtungsring (60, 64, 70) mit einem ringförmigen Element (64, 64a, 64b) trägt, das in dem ausgesparten Endbereich nahe der Pumpfläche angeordnet ist, wobei das ringförmige Element (64, 64a, 64b) eine Öffnung (80) definiert und erste und zweite halbkreisförmige Ringabschnitte (64a, 64b) aufweist.

2. Die Dieselkraftstoffpumpe gemäß Anspruch 1, wobei die Öffnung (80) dimensioniert ist, eine vorgegebene Leckrate vorbei an dem Dichtungsring (64, 64a, 64b) vorzusehen.

3. Die Dieselkraftstoffpumpe gemäß Anspruch 1 oder Anspruch 2, wobei die Öffnung (80) ein radialer Spalt in dem Dichtungsring ist.

4. Die Dieselkraftstoffpumpe gemäß den Ansprüchen 1 bis 3, wobei der Dichtungsring (64, 64a, 64b) einen sich in Längsrichtung verjüngenden Bereich (72a, 72b) umfasst.

5. Die Dieselkraftstoffpumpe gemäß Anspruch 1, wobei ein Federmittel zwischen dem ersten und dem zweiten halbkreisförmigen Ringabschnitt (64a, 64b) angeordnet ist.

6. Die Dieselkraftstoffpumpe gemäß Anspruch 1, die ein Halteelement (70) umfasst, das über dem ausgesparten Endbereich (62) aufgenommen und daran befestigt ist, um das ringförmige Element (64) an dem Kolben (14) zu halten.

7. Die Dieselkraftstoffpumpe gemäß Anspruch 1, wobei das Halteelement (70) eine Vorderkante mit einem abgestuften Durchmesser umfasst.

## Revendications

1. Pompe pour carburant diesel (2) pour un moteur à combustion interne, ladite pompe comprenant un piston de pompage (14) ayant une région terminale évidée (62) définissant une face de pompage du piston, ladite région terminale évidée ayant un diamètre inférieur au diamètre d'une portion de corps principal et dans laquelle le piston porte une bague d'étanchement (60, 64, 70) incluant un élément annulaire (64, 64a, 64b) agencé dans ladite région terminale évidée et à proximité de la face de pompage, l'élément annulaire (64, 64a, 64b) définissant un orifice (80) et comprenant une première et une seconde portion annulaire semi-circulaire (64a, 64b).

2. Pompe pour carburant diesel selon la revendication 1, dans laquelle l'orifice (80) est dimensionné pour assurer un débit de fuite prédéterminé au-delà de la bague d'étanchement (64, 64a, 64b).

3. Pompe pour carburant diesel selon la revendication 1 ou 2, dans laquelle l'orifice (80) est un intervalle radial dans la bague d'étanchement.

4. Pompe pour carburant diesel selon les revendications 1 à 3, dans laquelle la bague d'étanchement (64, 64a, 64b) inclut une région longitudinalement effilée (72a, 72b).

5. Pompe pour carburant diesel selon la revendication 1, dans laquelle un moyen formant ressort est disposé entre la première et la seconde portion annulaire semi-circulaire (64a, 64b).

6. Pompe pour carburant diesel selon la revendication 1, incluant un élément de retenue (70) qui est reçu par-dessus la région terminale évidée (62) et qui est fixé dans celle-ci de manière à retenir l'élément annulaire (64) sur le piston (14).

7. Pompe pour carburant diesel selon la revendication 1, dans laquelle l'élément de retenue (70) inclut un bord de tête ayant un diamètre gradué.
